# EUROPEAN PATENT SPECIFICATION

(11) **EP 3 022 696 B1**
(45) Date of publication and mention of the grant of the patent: **14.03.2018**
(21) Application number: 14826193.6
(22) Date of filing: 10.07.2014
(51) Int. Cl.: G06Q 20/34, G06Q 20/32, G06Q 30/06, G06F 21/34, H04W 4/00

(54) **SYSTEMS, METHODS, AND COMPUTER PROGRAM PRODUCTS FOR REPORTING CONTACTLESS TRANSACTION DATA**
SYSTEME, VERFAHREN UND COMPUTERPROGRAMMPRODUKTE ZUR MELDUNG VON DATEN AUS BERÜHRUNGSLOSEN TRANSAKTIONEN
SYSTÈMES, PROCÉDÉS ET PRODUITS PROGRAMMES D'ORDINATEUR POUR LE RAPPORT DE DONNÉES DE TRANSACTION SANS CONTACT

(30) Priority: 17.07.2013 US 201361847231 P
(43) Date of publication of application: 25.05.2016
(73) Proprietor: Google LLC, Mountain View, CA 94043 (US)
(72) Inventor: MATHEWS, Rebecca A., Dallas, TX 75214 (US); ARUMUGAM, Sukumar, Plano, TX 75024 (US); SUN, Jian, Irving, TX 75063 (US)
(74) Representative: Maikowski & Ninnemann Patentanwälte Partnerschaft mbB
(86) International application number: PCT/US2014/046109
(87) International publication number: WO 2015/009529

(56) References cited:
- WO-A2-2010/106554
- KR-A- 20070 051 817
- US-A1- 2011 055 628
- US-A1- 2012 150 601
- US-A1- 2012 203 610
- US-A1- 2012 203 610
- US-A1- 2012 221 468
- US-A1- 2012 296 722
- US-A1- 2013 085 835

## Description

### BACKGROUND

### Field

The current invention generally relates to processing data from contactless transactions. More specifically, the current invention relates to systems, methods, and computer program products for reporting contactless transaction data.

### Related Art

Mobile devices (*e.g*., cell phones or smart phones) are being used for more and more aspects of a person's daily life. One such use is within the mobile commerce environment, in particular, for a contactless transaction. In a contactless transaction, a mobile device equipped with payment and/or commerce applications is used to conduct a payment and/or commerce transaction without the need for physical cash, checks, credit cards, tickets, and the like. A contactless transaction may be processed using wireless technology to conduct a transaction between a mobile device and a remote terminal. Contactless transactions, including the protocol implemented to perform such transactions, are described in further detail in, for example, U.S. Patent Appln. Pub. Nos. 2013/0317924 and 2013/0317927. Further, US 2012/0203610 A1 discloses apparatus, methods, and computer program products for making a payment at a contactless payment terminal using an electronic coupon emulated as an electronic gift card. US 2012/221468 A1 discloses a plurality of communications which are passed directly from a merchant to a payment processing network.

In such contactless transactions, a mobile device is generally placed in proximity to a reader on a remote terminal (referred to as a tap). The mobile device and the reader exchange information using wireless technology to conduct the desired transaction. The mobile device frequently uses multiple applications and/or applets to conduct the transaction. For example, a wallet application may be used as the primary interface to conduct the transaction. In tum, the wallet application may work with a payment application and a mobile commerce application during the transaction. The payment application accesses a consumer's payment data, such as credit card information, and exchanges this information with the reader. The mobile commerce application may also manage and exchange offers, loyalty information, and the like with the reader during the transaction. As each application *(e.g*., payment, commerce) exchanges data with the reader, data may be generated and stored for each application. The stored data generated during the exchange are subsequently transmitted to separate servers.

One technical challenge associated with using these systems and methods is the storage, management, analysis, and reporting of a transaction data related to a tap event. That is, because the transaction data is generated by different applications and stored separately during a single tap event, a system, method, and program is needed to manage and associate transaction data. Such a system, method, and program allow disparate data to be combined with reference to a single tap event.

### BRIEF DESCRIPTION

The example embodiments presented herein meet the above-identified needs by providing systems, methods, and computer program products for reporting contactless transaction data.

In one aspect, the invention relates to a system for managing contactless transaction data. The system includes at least one memory, a contactless communication module, and at least one processor coupled to the at least one memory and the contactless communication module. The contactless communication module operable to communicate with a reader. The at least one memory is operable to store a first application and a second application. The at least one processor is operable to perform a tap event; generate a transaction identifier (ID) corresponding to the tap event; transmit first event data to the reader, the first event data being associated with the first application; transmit the second event data to the reader, the second event data being associated with the second application; generate first record data from at least a portion of the first event data; generate second record data from at least a portion of the second event data; assign the transaction ID to each of the first record data and the second record data; transmit, over a communications network, the transaction ID and the first record data to a first server; and transmit, over a communications network, the transaction ID and the second record data to a second server. The tap event occurs when the contactless communication module is communicatively coupled to the reader.

In another aspect, the invention relates to a method for reporting contactless transaction data. The method includes the steps of performing a tap event, the tap event occurring when a contactless communication module is communicatively coupled to a reader; generating a transaction identifier (ID) corresponding to the tap event; transmitting first event data to the reader, the first event data being associated with a first application; transmitting second event data to the reader, the second event data being associated with a second application; generating first record data from at least a portion of the first event data; generating second record data from at least a portion of the second event data; assigning the transaction ID to each of the first record data and the second record data; transmitting, over a communications network, the transaction ID and the first record data to a first server; and transmitting, over a communications network, the transaction ID and the second record data to a second server.

In yet another aspect, the invention relates to a non-transitory computer-readable medium having stored thereon sequences of instruction. The sequences of instruction are for causing at least one processor to perform a tap event, the tap event occurring when a contactless communication module is communicatively coupled to a reader; generate a transaction identifier (ID) corresponding to the tap event; transmit first event data to the reader, the first event data being associated with a first application; transmit second event data to the reader, the second event data being associated with a second application; generate first record data from at least a portion of the first event data; generate second record data from at least a portion of the second event data; assign the transaction ID to each of the first record data and the second record data; transmit, over a communications network, the transaction ID and the first record data to a first server; and transmit, over a communications network, the transaction ID and the second record data to a second server..

### BRIEF DESCRIPTION OF THE DRAWINGS

The features and advantages of the example embodiments of the invention presented herein will become more apparent from the detailed description set forth below when taken in conjunction with the following drawings.
FIG. 1 is a diagram of a system for managing contactless transaction data, according to an exemplary embodiment.
FIG. 2 is a diagram of a system for managing and reporting contactless transaction data, according to an exemplary embodiment
FIG. 3 is a sequence diagram for managing contactless transaction data, according to an exemplary embodiment.
FIG. 4A is a flowchart of a method for reporting contactless transaction data, according to an exemplary embodiment. FIG. 4B is a continuation of the flowchart from FIG. 4A
FIG. 5 is a collaboration diagram of functional modules deployed on a computer system, according to an exemplary embodiment.

### DETAILED DESCRIPTION

### I. Overview

The example embodiments presented herein are directed to systems, methods, and computer program products for managing and reporting contactless transaction data. This description is not intended to limit the application of the example embodiments presented herein. In fact, after reading the following description, it will be apparent to one skilled in the relevant art(s) how to implement the following example embodiments in alternative embodiments that can be utilized, for example, to process other types of contactless transactions including credits, debits, transfers, reservations, ticketing, and the like. In the example embodiments systems, methods and computer program products are presented for managing contactless transaction data. A mobile phone, which is communicatively coupled to a reader, generates a unique identifier (*i.e*., transaction identifier (ID)) and assigns the transaction ID to each separate record data generated as part of a tap event. The separate record data, together with the transaction ID, are then transmitted to corresponding separate servers according to the type of record data. Also systems, methods and computer program products are presented for reporting contactless transaction data. Separate record data stored on separate servers are collated using the transaction ID to generate report data.

The terms "application," "applet," "widget" and/or the plural form of these terms are used interchangeably herein to refer to an application (functioning independently or in conjunction with other applications) or set or subset of instructions or code, which when executed by one or more processors (e.g., in a mobile device or server) causes the processor(s) to perform specific tasks.

### II. System for Managing Contactless Transaction Data

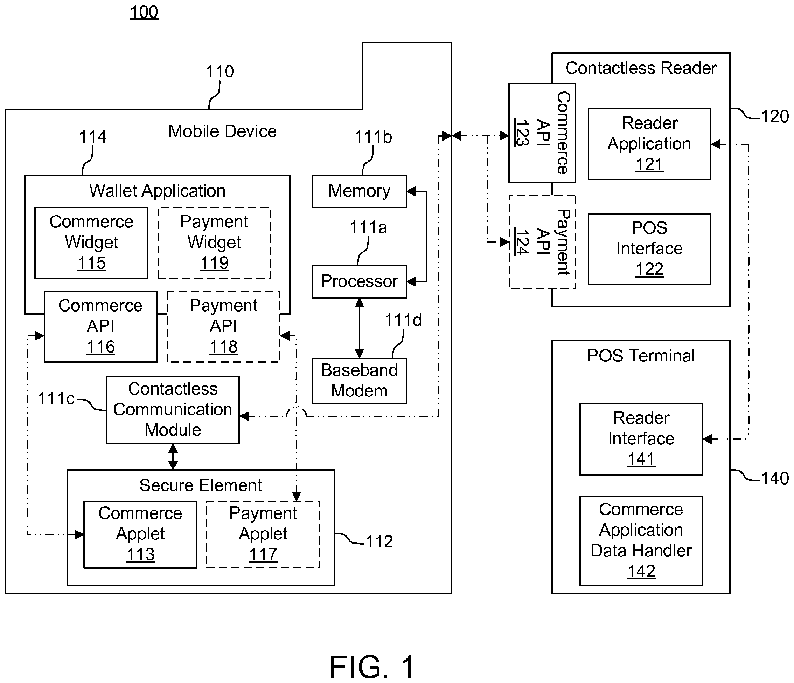

FIG. 1 is a diagram of a system 100 for managing contactless transaction data, according to an exemplary embodiment. To conduct a contactless transaction, a tap is performed by placing a mobile device 110 within a predetermined proximity to a reader 120. When tapped, the mobile device 110 becomes communicatively coupled to the reader 120 and exchanges data with the reader 120 while within the predetermined proximity to the reader 120. The reader 120 also is communicatively coupled to a point of sale (POS) terminal 140, where goods and/or services can be purchased. The point of sale terminal 140 may be within the same housing as reader 120. Alternatively, point of sale terminal 140 and reader 120 are communicatively coupled with each other but each of these components is housed separately.

In one example embodiment, the mobile device 110 is a cellular phone. In other embodiments, the mobile device 110 may be a tablet, a computer, or another type of device with connectivity to one or more mobile networks. Mobile device 110 includes a processor 111a, memory 111b, a contactless communication module 111c, a baseband modem 111d, and a user interface such as a display (not shown). Baseband modem 111d is a digital modem that is used for mobile network communications. The contactless communication module 111c is circuitry that enables the mobile device 110 to exchange data with the reader 120. In one example embodiment, the contactless communication module 111c is used to exchange data between a secure element (SE) 112 of the mobile device 110. The contactless communication module 111c may be designed to work with, for example, near filed communications (NFC) using ISO 14443 protocol or Bluetooth® technology.

Secure element 112 may be implemented as a Universal Integrated Circuit Card (UICC), embedded SE card, secure micro secure digital (microSD) card, and the like. Secure element 112 may also be implemented as a virtual secure element, which can be maintained outside of the mobile device 110 on a memory accessible by the mobile device 110, including but not limited to, for example, a remote server or computer, in the cloud, and the like. Secure element 112 is generally considered secure because it is a self-contained system, including dedicated memory, and is protected by hardware and software hardening techniques that are verified by independent testing.

Secure element 112 may include (*e.g*., stored thereon) one or more commerce applets. In on example embodiment, secure element 112 includes a commerce applet 113 associated with one or more commerce services and accounts issued by commerce service providers (SPs). A service provider is a company, organization, entity, or the like, that provides services to customers or consumers. Examples of service providers include merchants or companies issuing offers and/or loyalty accounts. A service may be an activity, capability, functionality, work, or use that is permitted or provided by a service provider, such as an offer or loyalty service.

Generally, a commerce applet 113 stores both loyalty and offer related data, providing one or more interfaces through which this data can be managed and used. Commerce applet 113 operates as a generic storage container, allowing multiple loyalty/offers services to share mechanisms (e.g., secure element, mobile device) for loyalty/offer data management. If memory restrictions and performance requirements limit the amount of loyalty/offers data that can be stored on secure element 113, additional data can be stored in mobile device memory 111b and managed by the consumer via commerce widget 115. For example, any graphic images related to an offer can be stored in memory 111b in order to optimize secure element memory allocation.

Commerce applet 113 includes a cached merchant data table enabling the storage/management of all data related to a given merchant. This allows the commerce data for a given merchant to be pre-loaded in secure element 112 or mobile device 110 by a wallet application 114. The commerce applet 113 also generates and stores various record data as part of a tap event, as will be discussed further below. A commerce applet 113 interfaces with reader 120 via a commerce application programming interface (API) 123. In an exemplary embodiment, a commerce applet 113 is in the form of a JavaCard applet and is accessible and manageable through the use of application protocol data unit (APDU) commands as defined in ISO 7816-4.

Secure element 112 can also include one or more payment applets 117. Each payment applet 117 is associated with a payment service and an account issued by a payment service provider. One or more payment applets 117 also can be loaded onto the secure element 112, for example, during manufacture and/or configuration of the secure element 112 and may be personalized to enable its use to conduct payment transactions. The payment applet 117 generates and stores various record data as part of the tap event, as will be discussed further below. A payment applet 117 interfaces with reader 120 via API 124. In an exemplary embodiment, payment applet 117 is in the form of a JavaCard applet and is accessible through the use of APDU commands as defined in ISO 7816-4.

It should be understood that other communications between the aforementioned devices may include communications with or through other intervening systems, hardware, and/or software, and such communications may include receiving, transferring, and/or managing data.

A wallet application 114 stored on mobile device 110 includes instructions which, when executed by the processor of the mobile device 110, cause the mobile device 110 to act as an instrument, for example, for processing transactions such as contactless commerce and/or payment transactions. The wallet application 114 serves as the primary user interface and allows a consumer to access or use one or more services provided by service providers, communicate with service providers, and/or interact with contactless services and/or control the operation of contactless hardware of the mobile device 110. The wallet application 114 is also used to manage the contactless transaction and contactless transaction data. In one exemplary embodiment, the wallet application 114 generates a transaction identification (ID), as will be discussed further below. Wallet application 114 communicates, through the use of APDU commands as defined in ISO 7816-4, with the commerce applet 113 via commerce API 116 and to payment applet 117 via payment API 118.

Commerce widget 115 is a component of the wallet application 114 that provides an interface for consumers to manage commerce elements (e.g., loyalty card credentials, offers and rewards), for example, through interactions with the display or user interface of a mobile device. Commerce widget 115 maintains, for example, a master list of commerce elements present on the handset in the secure element 112 or a memory of the mobile device (*e.g*., **I11**b). A subset of offers that have been identified as ready to be used are, in tum, moved to secure element 112 to be communicated to contactless reader 120 and POS terminal 140. Sensitive information, such as loyalty account identifiers can be stored on secure element 112.

Payment widget 119 is a component of the wallet application 114 that provides an interface for consumers to manage payment elements (*e.g*., credit or debit card credentials), for example, through interactions with the display or user interface of a mobile device.

Reader 120 includes a reader commerce application 121 (referred to herein simply as a "reader application") and a POS interface 122. Reader 120 manages two interfaces: one interface is with the secure element 112 in the mobile device 110 and the other interface is with POS terminal 140 which includes a reader interface 141 and a commerce application data handler 142. The functionality of reader 120 is the same whether reader 120 is standalone and connected to a payments terminal or merchant POS, or is integrated therein. The reader 120 also includes a reader payment application (not shown) as part of the reader application 121.

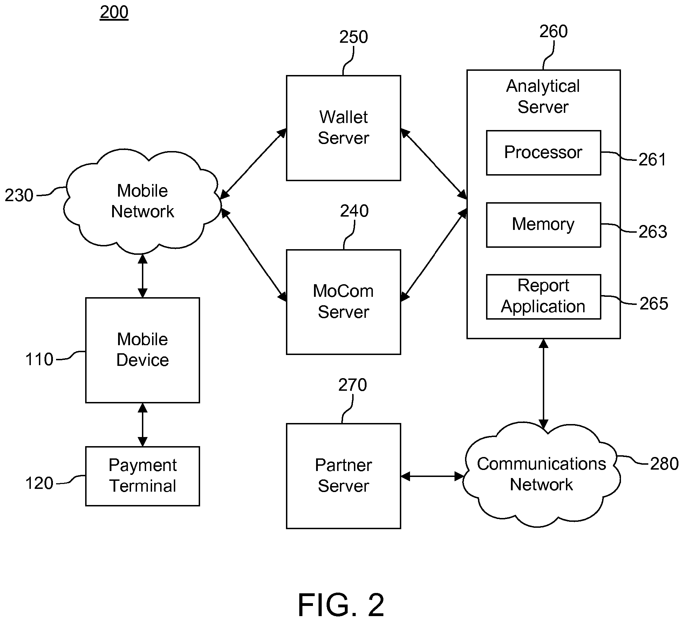

As shown in FIG. 2, mobile device 110 is communicatively coupled to a MoCom platform through the mobile network 230. The MoCom platform may be implemented on one or more servers, referred to herein individually and collectively as a MoCom server 240. The MoCom platform may refer to separate platforms that are communicatively coupled including an offers platform, a loyalty platform, and a rewards platform. Further details of MoCom server 240 may be found in, for example, U.S. Patent Appln. Pub. No. 2014/0074616.

The mobile device is also communicatively coupled to a wallet server 250 through the mobile network 230. The wallet server 250 manages communications with the wallet application 114, tracks the state of the wallet application 114 (*e.g*., by storing states of the wallet application 114 in a wallet database), and provides interfaces for communication with other computer systems. Further details of wallet server 250 and communication with the wallet application 114 may be found in, for example, U.S. Patent Appln. Pub. No. 2014/0012750. The mobile networks 230 may be mobile phone cellular networks, radio networks, and/or other types of networks, each of which may be operated by a corresponding mobile network operator.

### III. Process for Managing Contactless Transaction Data

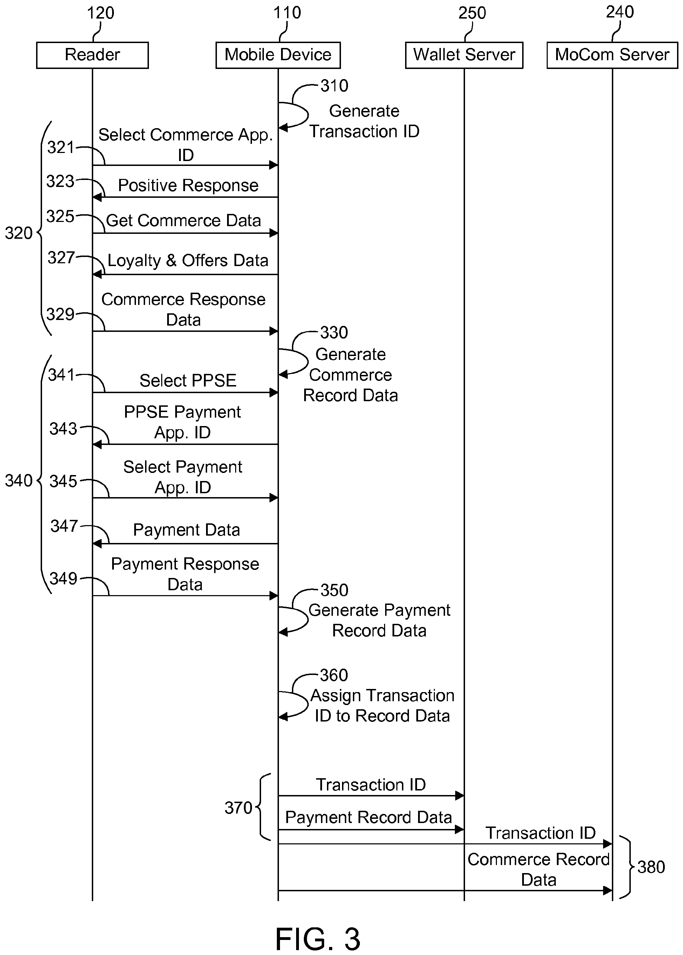

FIG. 3 is a sequence diagram for managing contactless transaction data, according to an exemplary embodiment. During the processing of a transaction, a merchant activates the reader 120 and the reader 120 requests a tap. The mobile device 110 is placed within a predetermined proximity to the reader 120 to initiate the tap.

Once a wireless connection has been established, the wallet application 114 stored in the mobile device 110 generates a unique identifier *(i.e.,* transaction identifier (ID)) corresponding to the tap event in step 310. The transaction ID is a unique identifier created for and corresponding to each tap event. In one exemplary embodiment, the transaction ID is a unique variable character value made up of 64 bytes. Once the wallet application 114 on the mobile device 110 generates the transaction ID, the reader 120 and the mobile device 110 exchange data to complete the commerce and payment transaction *(e.g*., tap event). Steps 320 *(i.e.,* steps 321-329) enable processing of commerce transactions between the reader 120 and the mobile device 110. The transaction ID may be generated before, during or after the processing of steps 320.

After a mobile device has tapped or been tapped on reader 120, steps 320 are initiated to begin processing of the commerce transaction. At step 321, reader 120 sends to secure element 112 a Select Commerce command along with a commerce application identifier ("Select Commerce App. ID") indicating which commerce applet within secure element 112 it seeks to cooperate with (*e.g*., commerce applet 113). In response, secure element 112 sends a positive or negative response in step 323 (positive response shown), indicating whether the commerce applet was successfully selected based on the received information. A negative response (not shown) results in reader 120 terminating reader application 121 (*e.g*., FIG. 1; reader application 121). If the response is positive ("Positive Response"), then, in step 325, reader 120 sends a command ("Get Commerce Data") to secure element 112 specifying identifying information for processing the commerce transaction. For example, the identifying information may include a merchant/store identifier, and any additional loyalty, offer, or reward schemes supported by that location, date and time information, the version of reader commerce application 121 supported by reader 120, and any merchant capability data.

In step 327, secure element 112 returns commerce elements (e.g., offer data, loyalty data, reward data) to reader 120 ("Loyalty & Offers Data") based on the fields in the Get Commerce Data command received from reader 120. Offer data may include, for example, data corresponding to a coupon, discount, or other benefit provided to consumer, ordinarily subject to terms and conditions (*e.g*., a 20% discount when a purchase exceeds $50.00, buy two of a specific product and receive a discount of $1.50). Loyalty data may include, for example, a membership card or number corresponding to a partner (*e.g*., the merchant), by which a consumer receives discounts, receives offers, accumulates points towards offers or other rewards, and the like. In one example embodiment, commerce applet 113 builds a package containing the commerce data (*e.g*., a buffer or set of buffers including loyalty data, offer data, or rewards data). In another example embodiment, the buffer is pre-built using memory space in the secure element 112. In other example embodiments the user may select, though the wallet application 114, particular offers or rewards to be used in the transaction and those offers and rewards may be included in the Loyalty & Offers Data sent to the reader.

The reader 120, in step 329, transmits data ("Commerce Response Data") in response to the commerce elements. Such data may indicate, for example, whether or not the commerce elements were successfully transmitted, accepted, and applied to the transaction. This data may also include the specific merchant/store location and the capabilities of that merchant/store.

After the commerce transaction has been processed at steps 320, the mobile device 110, and in particular, the commerce widget 115, generates commerce record data in step 330. The record data may include the commerce elements transmitted in step 327 and the commerce response data received in step 329. That is, the record data may include, for example, the merchant/store identifier, merchant/store location, merchant/store capabilities, versions of the applications used, consumer ID, offers used, the result of the commerce transaction (also referred to as an event result), and the like. The commerce record data may be stored in a database on the secure element 112 or the mobile device memory 111b.

Reader 120 may process a payment transaction in accordance with steps 340 (*i.e*., steps 341-349). In step 341, the reader 120 transmits a Proximity Payment System Environment request ("PPSE Select") to secure element 112, to select the PPSE. The PPSE serves as a directory of available credentials currently stored in secure element 112. Each credential is assigned a corresponding application identifier (App. ID) associated with a payment application and stored in the PPSE. In turn, in step 343, the secure element 112 returns a PPSE payment application ID indicating which payment applet (and hence which corresponding payment network) should be used to perform the payment transaction ("PPSE Payment App. ID").

In response, reader 120 sends, in step 345, a Select App. ID indicating whether or not the reader 120 supports the particular applet ("Select App. ID") selected by the secure element 112 to use for the payment transaction. At step 347, file control information (FCI) associated with the payment applet 117 (*i.e*., FIG. 1; payment applet 117) may be sent by secure element 112 to reader 120. Other payment and card information may be sent by secure element 112 to reader 120 ("Payment/Card Data") in step 347. In example embodiments, the reader 120 returns to the secure element 112 payment response data, in step 349. The payment response data may include information indicating whether or not the particular payment transaction for this tap was successful. Such information is referred to as an event result.

After the payment transaction has been processed in steps 340, the mobile device 110 and in particular the payment widget generates, in step 350, payment record data. Payment record data may include, for example, a wallet ID, an event ID corresponding to the payment record maintained by the payment service provider, the event result, and the like. The payment record data may be stored in a database on either the secure element 112 or mobile device memory 111b.

Steps 320 may be performed before steps 340, afterward, or substantially simultaneously. Step 330 may be performed any time after steps 320 or substantially simultaneously. Step 350 may be performed any time after steps 340 or substantially simultaneously.

Once the payment and commerce record data has been generated, the wallet application 114 assigns, at step 360, the transaction ID generated at step 310 to each of the commerce and payment record data and stores the transaction ID in the respective databases. As discussed above, the commerce record data and payment record data are separately stored in databases in the secure element 112 or mobile device memory 111b by the commerce widget 115 and payment widget 119.

The mobile device 110 may exchange data with various platforms over the mobile network 230 including the MoCom server 240 and wallet server 250. In step 370, the mobile device 110 transfers to the wallet server 250, over the mobile network 230, the payment record data with the assigned transaction ID. In step 380, the mobile device 110 transfers to the MoCom server 240, over the mobile network 230, the commerce record data with the assigned transaction ID.

When another tap event (hereinafter second tap event) is initiated by the tap of a mobile device 110 on the reader 120, steps 310 through 360 are repeated so as to process the transactions, record the commerce and payment record data, and associate that record data with a unique transaction ID corresponding to the tap event. That is, a new transaction ID is generated for the second tap event and the record data generated in the second tap event are assigned the new transaction ID. Instead of transmitting commerce record data and the payment record data to the MoCom server 240 and wallet server 250, respectively, after each tap event, the mobile device 110 may transmit in steps 370 and 380 the commerce and payment record data from multiple tap events at once (*i.e*., in a batch). The mobile device and servers (and any other systems or devices with access to the record data) can differentiate between different tap events and determine which payment and commerce transactions were processed during the same tap event by using the transaction ID.

### IV. System for Reporting Contactless Transaction Data

Record data generated in contactless transactions may be used for example, for troubleshooting problems in the applications, compatibility, and the like. The record data may also be used, for example, to understand if a particular offer was successful and/or understanding a purchasing behavior to improve the accuracy, desirability, and usefulness of offers and loyalty programs. Thus, commerce record data and payment record data may be used to generate reports and report that data. For example, the commerce and payment record data may be collated to create data reports. A system for reporting contactless transaction data is described with reference to FIG. 2.

As discussed above, record data from contactless transactions may be stored on various servers including a MoCom server 240 and a wallet server 250. In one example embodiment, commerce record data is stored on the MoCom server 240 and payment record data is stored on the wallet server 250. Both the MoCom server 240 and the wallet server 250 may be communicatively coupled to an analytical server 260, for example, by using any suitable means known in the art, using, for example, local area network (LAN) or wide area networks (WAN). In alternate example embodiments, the analytical server 260 may be the same server as either or both the MoCom server 240 and wallet server 250.

The analytical server is used to report contactless transaction data, and in particular, to collate record data as will be discussed further below. The analytical server 260 includes a processor 261, a memory 263 and a report application 265, which are used to report the contactless transaction data as discussed below. The record data may be reported and transmitted to a communicatively coupled apparatus for further analysis and distribution. Such a communicatively coupled apparatus may be local to the analytical server 260, for example a display screen or printer. In such cases, analysis of the contactless transaction data reported may be performed locally on the analytical server 260. The communicatively coupled apparatus may be associated with a partner (*e.g*., service provider, merchant, and the like) system. Such partner systems may include a partner server 270, which is communicatively coupled to the analytical server 260 through a communications network 280, which may be any suitable communications network, for example, a secure fiber optic network.

### V. Process for Reporting Contactless Transaction Data

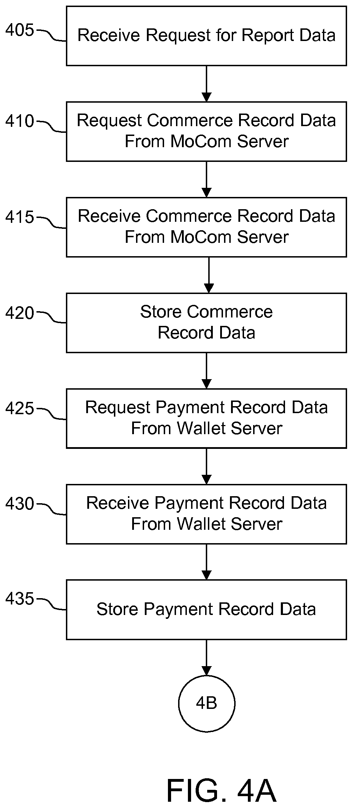

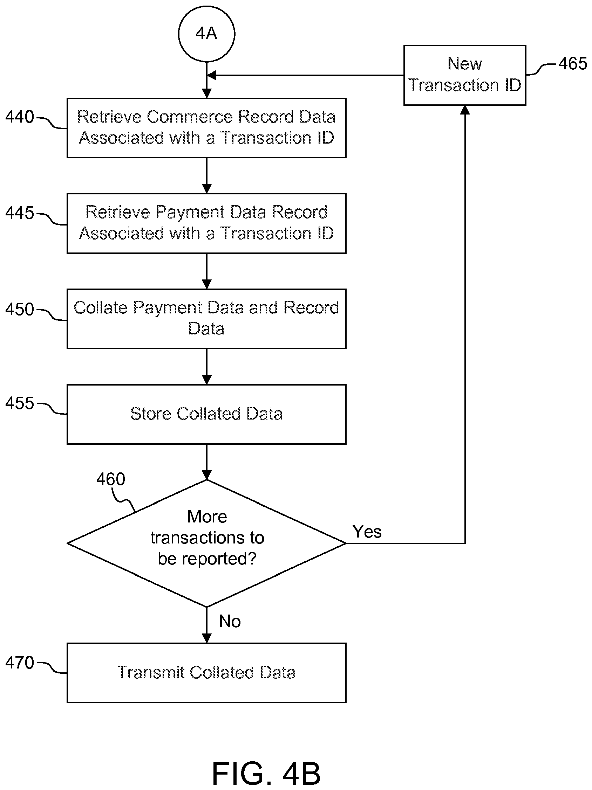

FIG. 4A and 4B are flowcharts of a method for reporting contactless transaction data, according to an exemplary embodiment. In step 405, the analytical server 260 receives a request for report data. Such a request may be received, for example, from an input via a peripheral device attached to the analytical server 260 or from a request generated by the partner server 270 and communicated over the communications network 280. Requests for reports may include, for example, requests for data associated with contactless transactions (i) over a specified period, (ii) with a specified merchant/store, or (iii) using a specified payment service.

In response to a request for commerce data, the commerce data to be reported is requested from the MoCom server in step 410. The requested commerce data, together with the assigned transaction IDs, are then received from the MoCom server in step 415 and stored in step 420 in the memory 263 on the an analytical server 260. In turn, the payment data to be reported is requested from the wallet server in step 425. The requested payment data, together with the assigned transaction IDs are received in step 430 and stored in step 435 in the memory 263 on the analytical server 260. Steps 410-420 may be performed before, after, or substantially simultaneously with steps 425-435.

The report application 265 then collates the commerce record data and the payment data to associate the commerce record data for a particular tap event with the payment record data corresponding to that tap event. The report application 265 collates the record data using steps 440 through 465 using a transaction ID. That is, the report application 265, in step 440, retrieves the commerce record data associated with that transaction ID. In step 445, the report application 265 retrieves the payment record data associated with that transaction ID. Step 440 may be performed before, after, or substantially simultaneously with step 445. The report application 265, in turn, collates the commerce record data and payment record data by combining the retrieved commerce and payment record data as collated data in step 450. The collated data is stored in the memory 263 in step 455.

The report application 265 checks if more transactions/tap events are to be reported. If so, a new transaction ID is identified in step 465 and steps 440 through 455 are repeated for the new transaction ID. If no further transactions/tap events are to be reported, in step 470, the collated data is transmitted to a communicatively coupled apparatus. In the even that a request for report data is received from a partner server, the collated data is transmitted as report data to the partner server 270 via the communications network 280.

### VI. Computer Readable Medium Implementation

The example embodiments described above, such as, for example, the systems and procedures depicted in or discussed in connection with FIGs. 1 through 4 or any part or function thereof, may be implemented by using hardware, software or a combination of the two. The implementation may be in one or more computers or other processing systems. While manipulations performed by these example embodiments may have been referred to in terms commonly associated with mental operations performed by a human operator, no human operator is needed to perform any of the operations described herein. In other words, the operations may be completely implemented with machine operations. Useful machines for performing the operation of the example embodiments presented herein include general-purpose digital computers or similar devices.

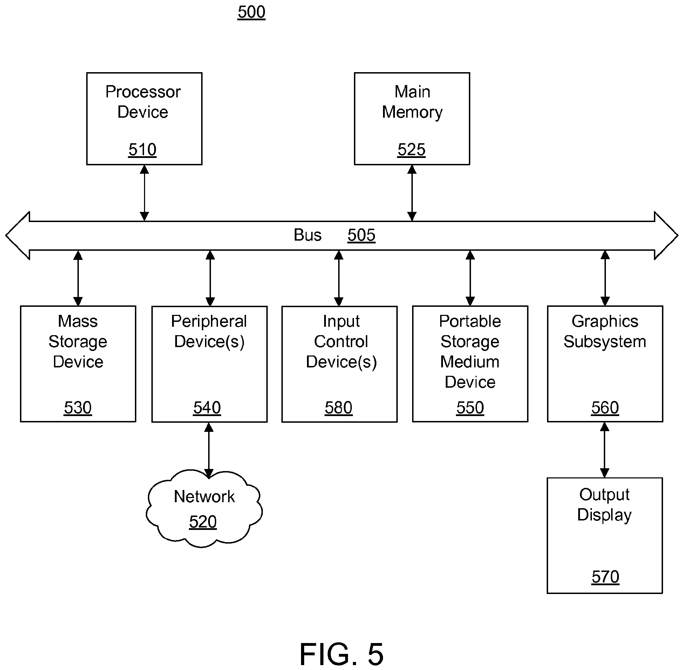

FIG. 5 is a block diagram of a general and/or special purpose computer 500 that may be employed in accordance with various example embodiments herein. The computer 500 may be, for example, a user device, a user computer, a client computer, and/or a server computer, among other things.

The computer 500 may include without limitation a processor device 510, a main memory 525, and an interconnect bus 505. The processor device 510 may include without limitation a single microprocessor, or may include a plurality of microprocessors for configuring the computer 500 as a multi-processor system. The main memory 525 stores, among other things, instructions and/or data for execution by the processor device 510. The main memory 525 may include banks of dynamic random access memory (DRAM), as well as cache memory.

The computer 500 may further include a mass storage device 530, peripheral device(s) 540, portable storage medium device(s) 550, input control device(s) 580, a graphics subsystem 560, and/or an output display 570. For explanatory purposes, all components in the computer 500 are shown in FIG. 5 as being coupled via the bus 505. However, the computer 500 is not so limited. Devices of the computer 500 may be coupled via one or more data transport means. For example, the processor device 510 and/or the main memory 525 may be coupled via a local microprocessor bus. The mass storage device 530, peripheral device(s) 540, portable storage medium device(s) 550, and/or graphics subsystem 560 may be coupled via one or more input/output (I/O) buses. The mass storage device 530 may be a nonvolatile storage device for storing data and/or instructions for use by the processor device 510. The mass storage device 530 may be implemented, for example, with a magnetic disk drive or an optical disk drive. In a software embodiment, the mass storage device 530 is configured for loading contents of the mass storage device 530 into the main memory 525.

The portable storage medium device 550 operates in conjunction with a nonvolatile portable storage medium, such as, for example, a compact disc read only memory (CD-ROM), to input and output data and code to and from the computer 500. In some embodiments, the software for storing an internal identifier in metadata may be stored on a portable storage medium, and may be inputted into the computer 500 via the portable storage medium device 550. The peripheral device(s) 540 may include any type of computer support device, such as, for example, an input/output (I/O) interface configured to add additional functionality to the computer 500. For example, the peripheral device(s) 540 may include a network interface card for interfacing the computer 500 with a network 520.

The input control device(s) 580 provide a portion of the user interface for a user of the computer 500. The input control device(s) 580 may include a keypad and/or a cursor control device. The keypad may be configured for inputting alphanumeric characters and/or other key information. The cursor control device may include, for example, a mouse, a trackball, a stylus, and/or cursor direction keys. In order to display textual and graphical information, the computer 500 may include the graphics subsystem 560 and the output display 570. The output display 570 may include a cathode ray tube (CRT) display and/or a liquid crystal display (LCD). The graphics subsystem 560 receives textual and graphical information, and processes the information for output to the output display 570.

Each component of the computer 500 may represent a broad category of a computer component of a general and/or special purpose computer. Components of the computer 500 are not limited to the specific implementations provided here.

Portions of the example embodiments of the invention may be conveniently implemented by using a conventional general-purpose computer, a specialized digital computer and/or a microprocessor programmed according to the teachings of the present disclosure, as is apparent to those skilled in the computer art. Appropriate software coding may readily be prepared by skilled programmers based on the teachings of the present disclosure.

Some embodiments may also be implemented by the preparation of application-specific integrated circuits, field programmable gate arrays, or by interconnecting an appropriate network of conventional component circuits.

Some embodiments include a computer program product. The computer program product may be a storage medium or media having instructions stored thereon or therein which can be used to control, or cause, a computer to perform any of the procedures of the example embodiments of the invention. The storage medium may include without limitation a floppy disk, a mini disk, an optical disc, a Blu-Ray Disc, a DVD, a CD-ROM, a micro-drive, a magneto-optical disk, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer readable medium or media, some implementations include software for controlling both the hardware of the general and/or special computer or microprocessor, and for enabling the computer or microprocessor to interact with a human user or other mechanism utilizing the results of the example embodiments of the invention. Such software may include without limitation device drivers, operating systems, and user applications. Ultimately, such computer readable media further includes software for performing example aspects of the invention, as described above.

Included in the programming and/or software of the general and/or special purpose computer or microprocessor are software modules for implementing the procedures described above.

While various example embodiments of the invention have been described above, it should be understood that they have been presented by way of example, and not limitation. It is apparent to persons skilled in the relevant art(s) that various changes in form and detail can be made therein. Thus, the invention should not be limited by any of the above described example embodiments, but should be defined only in accordance with the following claims and their equivalents.

In addition, it should be understood that the figures are presented for example purposes only. The architecture of the example embodiments presented herein is sufficiently flexible and configurable, such that it may be utilized and navigated in ways other than that shown in the accompanying figures.
Further, the purpose of the Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that the procedures recited in the claims need not be performed in the order presented.

## Claims

1. A mobile device for managing contactless transaction data, the mobile device (110) comprising:
at least one memory (111b) operable to store a first application (117) and a second application (113);
a contactless communication module (111c) operable to communicate with a reader (120); and
at least one processor (111a) coupled to the at least one memory (111b) and the contactless communication module (120),
the at least one processor (111a) being operable to:
perform a tap event, the tap event occurring when the contactless communication module (111c) is communicatively coupled to the reader (120); and
generate a transaction identifier (ID) corresponding to the tap event;
wherein the at least one processor (111a) is further operable to:
transmit first event data to the reader (120), the first event data being associated with the first application (117);
transmit second event data to the reader (120), the second event data being associated with the second application (113);
generate first record data from at least a portion of the first event data;
generate second record data from at least a portion of the second event data;
assign the transaction ID to each of the first record data and the second record data;
transmit, over a communications network (280), the transaction ID and the first record data to a first server (250); and
transmit, over a communications network (280), the transaction ID and the second record data to a second server (240).

2. The mobile device of claim 1, the at least one processor (111a) being further operable to:
receive first event response data from the reader (120), the first event response data being associated with the first event data; and
receive second event response data from the reader (120), the second event response data being associated with the second event data,
wherein the first record data is generated from at least a portion of the first event data and at least a portion of the first event response data, and
wherein the second record data is generated from at least a portion of the second event data and at least a portion of the second event response data, and/or
wherein the first application is a payment application (117) and the first event data is payment data, and/or
wherein the second application is a commerce application (113) and the second event data is commerce data.

3. The mobile device of claim 2, wherein the first record data includes at least one of a wallet ID, an event ID, and an event result.

4. The mobile device of claim 2, the second record data includes at least one of a merchant ID and a consumer ID.

5. A method for managing contactless transaction data, the method comprising the steps of:
performing a tap event, the tap event occurring when a contactless communication module (111c) is communicatively coupled to a reader (120); and
generating a transaction identifier (ID) corresponding to the tap event;
wherein the method further comprises the steps of:
transmitting first event data to the reader (120), the first event data being associated with a first application (117);
transmitting second event data to the reader (120), the second event data being associated with a second application (113);
generating first record data from at least a portion of the first event data;
generating second record data from at least a portion of the second event data;
assigning the transaction ID to each of the first record data and the second record data;
transmitting, over a communications network (280), the transaction ID and the first record data to a first server (250); and
transmitting, over a communications network (280), the transaction ID and the second record data to a second server (240).

6. The method of claim 5, further comprising the steps of:
receiving first event response data from the reader (120), the first event response data being associated with the first event data; and
receiving second event response data from the reader (120), the second event response data being associated with the second event data,
wherein the first record data is generated from at least a portion of the first event data and at least a portion of the first event response data, and
wherein the second record data is generated from at least a portion of the second event data and at least a portion of the second event response data,
wherein the first application is a payment application (117) and the first event data is payment data, and/or
wherein the second application is a commerce application (113) and the second event data is commerce data.

7. The method of claim 6, wherein the first record data includes at least one of a wallet ID, an event ID, and an event result.

8. The method of claim 6, the second record data includes at least one of a merchant ID and a consumer ID.

9. A non-transitory computer-readable medium having stored thereon sequences of instructions for causing at least one processor to:
perform a tap event, the tap event occurring when a contactless communication module (111c) is communicatively coupled to a reader (120); and
generate a transaction identifier (ID) corresponding to the tap event;
wherein the non-transitory computer-readable medium has stored thereon sequences of instructions for further causing at least one processor (111a) to:
transmit first event data to the reader (120), the first event data being associated with a first application (117);
transmit second event data to the reader (120), the second event data being associated with a second application (113);
generate first record data from at least a portion of the first event data;
generate second record data from at least a portion of the second event data;
assign the transaction ID to each of the first record data and the second record data;
transmit, over a communications network (280), the transaction ID and the first record data to a first server (250); and
transmit, over a communications network (280), the transaction ID and the second record data to a second server (240).

10. The non-transitory computer-readable medium of claim 9 having stored thereon sequences of instructions for further causing at least one processor (111a) to:
receive first event response data from the reader (120), the first event response data being associated with the first event data; and
receive second event response data from the reader (120), the second event response data being associated with the second event data,
wherein the first record data is generated from at least a portion of the first event data and at least a portion of the first event response data, and
wherein the second record data is generated from at least a portion of the second event data and at least a portion of the second event response data.

11. The non-transitory computer-readable medium of claim 9, wherein the first application is a payment application (117) and the first event data is payment data.

12. The non-transitory computer-readable medium of claim 11, wherein the first record data includes at least one of a wallet ID, an event ID, and an event result.

13. The non-transitory computer-readable medium of claim 9, wherein the second application is a commerce application (117) and the second event data is commerce data.

14. The non-transitory computer-readable medium of claim 13, the second record data includes at least one of a merchant ID and a consumer ID.

## Patentansprüche

1. Mobilgerät für das Verwalten kontaktloser Transaktionsdaten, das Mobilgerät (110) umfassend:
mindestens einen Speicher (111b), der verwendet werden kann, um eine erste Anwendung (117) und eine zweite Anwendung (113) zu speichern;
ein kontaktloses Kommunikationsmodul (111c), das verwendet werden kann, um mit einem Leser (120) zu kommunizieren; und
mindestens einen Prozessor (lila), der mit dem mindestens einen Speicher (111b) und dem kontaktlosen Kommunikationsmodul (120) gekoppelt ist, wobei der mindestens eine Prozessor (111a) verwendet werden kann, um:
ein Tippereignis durchzuführen, wobei das Tippereignis erfolgt, wenn das kontaktlose Kommunikationsmodul (111c) mit dem Leser (120) kommunikativ gekoppelt ist; und
eine dem Tippereignis entsprechende
Transaktionskennung (ID) zu erzeugen;
wobei der mindestens eine Prozessor (111 a) ferner verwendet werden kann, um:
erste Ereignisdaten zum Leser (120) zu senden, wobei die ersten Ereignisdaten der ersten Anwendung (117) zugeordnet sind;
zweite Ereignisdaten zum Leser (120) zu senden, wobei die zweiten Ereignisdaten der zweiten Anwendung (113) zugeordnet sind;
erste Aufzeichnungsdaten von mindestens einem Teil der ersten Ereignisdaten zu erzeugen;
zweite Aufzeichnungsdaten von mindestens einem Teil der zweiten Ereignisdaten zu erzeugen;
die Transaktions-ID jeweils den ersten Aufzeichnungsdaten und den zweiten Aufzeichnungsdaten zuzuweisen;
die Transaktions-ID und die ersten Aufzeichnungsdaten, über ein Kommunikationsnetzwerk (280), an einen ersten Server (250) zu senden; und
die Transaktions-ID und die zweiten Aufzeichnungsdaten, über ein Kommunikationsnetzwerk (280), an einen zweiten Server (240) zu senden.

2. Mobilgerät nach Anspruch 1, wobei der mindestens eine Prozessor (111a) ferner verwendet werden kann, um:
erste Ereignisantwortdaten vom Leser (120) zu empfangen, wobei die ersten Ereignisantwortdaten den ersten Ereignisdaten zugeordnet sind; und
zweite Ereignisantwortdaten vom Leser (120) zu empfangen, wobei die zweiten Ereignisantwortdaten den zweiten Ereignisdaten zugeordnet sind,
wobei die ersten Aufzeichnungsdaten von mindestens einem Teil der ersten Ereignisdaten und mindestens einem Teil der ersten Ereignisantwortdaten erzeugt werden, und
wobei die zweiten Aufzeichnungsdaten von mindestens einem Teil der zweiten Ereignisdaten und mindestens einem Teil der zweiten Ereignisantwortdaten erzeugt werden, und/oder
wobei die erste Anwendung eine Zahlungsanwendung (117) ist und die ersten Ereignisdaten Zahlungsdaten sind, und/oder
wobei die zweite Anwendung eine Handelsanwendung (113) ist und die zweiten Ereignisdaten Handelsdaten sind.

3. Mobilgerät nach Anspruch 2, wobei die ersten Aufzeichnungsdaten mindestens eine Geldbörsen-ID, eine Ereignis-ID und ein Ereignisergebnis beinhalten.

4. Mobilgerät nach Anspruch 2, wobei die zweiten Aufzeichnungsdaten mindestens eine Händler-ID und eine Verbraucher-ID beinhalten.

5. Verfahren für das Verwalten kontaktloser Transaktionsdaten, das Verfahren folgende Schritte umfassend:
Durchführen eines Tippereignisses, wobei das Tippereignis erfolgt, wenn ein kontaktloses Kommunikationsmodul (111c) mit einem Leser (120) kommunikativ gekoppelt ist; und
Erzeugen einer dem Tippereignis entsprechenden Transaktionskennung (ID);
wobei das Verfahren ferner folgende Schritte umfasst:
Senden erster Ereignisdaten zum Leser (120), wobei die ersten Ereignisdaten einer ersten Anwendung (117) zugeordnet sind;
Senden zweiter Ereignisdaten zum Leser (120), wobei die zweiten Ereignisdaten einer zweiten Anwendung (113) zugeordnet sind;
Erzeugen erster Aufzeichnungsdaten von mindestens einem Teil der ersten Ereignisdaten;
Erzeugen zweiter Aufzeichnungsdaten von mindestens einem Teil der zweiten Ereignisdaten;
Zuweisen der Transaktions-ID jeweils zu den ersten Aufzeichnungsdaten und den zweiten Aufzeichnungsdaten;
Senden der Transaktions-ID und der ersten Aufzeichnungsdaten, über ein Kommunikationsnetzwerk (280), an einen ersten Server (250); und
Senden der Transaktions-ID und der zweiten Aufzeichnungsdaten, über ein Kommunikationsnetzwerk (280), an einen zweiten Server (240).

6. Verfahren nach Anspruch 5, ferner folgende Schritte umfassend:
Empfangen erster Ereignisantwortdaten vom Leser (120), wobei die ersten Ereignisantwortdaten den ersten Ereignisdaten zugeordnet sind; und
Empfangen zweiter Ereignisantwortdaten vom Leser (120), wobei die zweiten Ereignisantwortdaten den zweiten Ereignisdaten zugeordnet sind,
wobei die ersten Aufzeichnungsdaten von mindestens einem Teil der ersten Ereignisdaten und mindestens einem Teil der ersten Ereignisantwortdaten erzeugt werden, und
wobei die zweiten Aufzeichnungsdaten von mindestens einem Teil der zweiten Ereignisdaten und mindestens einem Teil der zweiten Ereignisantwortdaten erzeugt werden,
wobei die erste Anwendung eine Zahlungsanwendung (117) ist und die ersten Ereignisdaten Zahlungsdaten sind, und/oder
wobei die zweite Anwendung eine Handelsanwendung (113) ist und die zweiten Ereignisdaten Handelsdaten sind.

7. Verfahren nach Anspruch 6, wobei die ersten Aufzeichnungsdaten mindestens eine Geldbörsen-ID, eine Ereignis-ID und ein Ereignisergebnis beinhalten.

8. Verfahren nach Anspruch 6, wobei die zweiten Aufzeichnungsdaten mindestens eine Händler-ID und eine Verbraucher-ID beinhalten.

9. Nicht flüchtiges, computerlesbares Medium, auf dem Sequenzen von Anweisungen gespeichert sind, die mindestens einen Prozessor veranlassen:
ein Tippereignis durchzuführen, wobei das Tippereignis erfolgt, wenn ein kontaktloses Kommunikationsmodul (111c) mit einem Leser (120) kommunikativ gekoppelt ist; und
eine dem Tippereignis entsprechende Transaktionskennung (ID) zu erzeugen;
wobei auf dem nicht flüchtigen, computerlesbaren Medium Sequenzen von Anweisungen gespeichert sind, die ferner mindestens einen Prozessor (111a) veranlassen:
erste Ereignisdaten zum Leser (120) zu senden, wobei die ersten Ereignisdaten einer ersten Anwendung (117) zugeordnet sind;
zweite Ereignisdaten zum Leser (120) zu senden, wobei die zweiten Ereignisdaten einer zweiten Anwendung (113) zugeordnet sind;
erste Aufzeichnungsdaten von mindestens einem Teil der ersten Ereignisdaten zu erzeugen;
zweite Aufzeichnungsdaten von mindestens einem Teil der zweiten Ereignisdaten zu erzeugen;
die Transaktions-ID jeweils den ersten Aufzeichnungsdaten und den zweiten Aufzeichnungsdaten zuzuweisen;
die Transaktions-ID und die ersten Aufzeichnungsdaten, über ein Kommunikationsnetzwerk (280), an einen ersten Server (250) zu senden; und
die Transaktions-ID und die zweiten Aufzeichnungsdaten, über ein Kommunikationsnetzwerk (280), an einen zweiten Server (240) zu senden.

10. Nicht flüchtiges, computerlesbares Medium nach Anspruch 9, auf dem Sequenzen von Anweisungen gespeichert sind, die ferner mindestens einen Prozessor (111a) veranlassen:
erste Ereignisantwortdaten vom Leser (120) zu empfangen, wobei die ersten Ereignisantwortdaten den ersten Ereignisdaten zugeordnet sind; und
zweite Ereignisantwortdaten vom Leser (120) zu empfangen, wobei die zweiten Ereignisantwortdaten den zweiten Ereignisdaten zugeordnet sind,
wobei die ersten Aufzeichnungsdaten von mindestens einem Teil der ersten Ereignisdaten und mindestens einem Teil der ersten Ereignisantwortdaten erzeugt werden, und
wobei die zweiten Aufzeichnungsdaten von mindestens einem Teil der zweiten Ereignisdaten und mindestens einem Teil der zweiten Ereignisantwortdaten erzeugt werden.

11. Nicht flüchtiges, computerlesbares Medium nach Anspruch 9, wobei die erste Anwendung eine Zahlungsanwendung (117) ist und die ersten Ereignisdaten Zahlungsdaten sind.

12. Nicht flüchtiges, computerlesbares Medium nach Anspruch 11, wobei die ersten Aufzeichnungsdaten mindestens eine Geldbörsen-ID, eine Ereignis-ID und ein Ereignisergebnis beinhalten.

13. Nicht flüchtiges, computerlesbares Medium nach Anspruch 9, wobei die zweite Anwendung eine Handelsanwendung (117) ist und die zweiten Ereignisdaten Handelsdaten sind.

14. Nicht flüchtiges, computerlesbares Medium nach Anspruch 13, wobei die zweiten Aufzeichnungsdaten mindestens eine Händler-ID und eine Verbraucher-ID beinhalten.

## Revendications

1. Dispositif mobile pour la gestion de données de transaction sans contact, le dispositif mobile (110) comprenant :
au moins une mémoire (111b) permettant de stocker une première application (117) et une deuxième application (113) ;
un module de communication sans contact (111c) conçu pour communiquer avec un lecteur (120) ; et
au moins un processeur (111a) couplé à l'au moins une mémoire (111b) et le module de communication sans contact (120), l'au moins un processeur (111a) pouvant être utilisé pour :
la réalisation d'un événement de connexion, l'événement de connexion se passant lorsque le module de communication sans contact (111c) est de manière communicative couplé au lecteur (120) ; et
la génération d'un identificateur de transaction (ID) correspondant à l'événement de connexion ;
dans lequel l'au moins un processeur (111a) est en outre utilisable pour :
la transmission de premières données d'événement au lecteur (120), les premières données d'événement étant associées à la première application (117) ;
la transmission des deuxièmes données d'événement au lecteur (120), les deuxièmes données d'événement étant associées à la deuxième application (113) ;
la génération des premières données d'enregistrement depuis au moins une partie des premières données d'événement ;
la génération des deuxièmes données d'enregistrement depuis au moins une partie des deuxièmes données d'événement ;
l'attribution de l'ID de transaction à chacune des premières données d'enregistrement et des deuxièmes données d'enregistrement ;
la transmission, sur un réseau de communication (280), de l'ID de transaction et des premières données d'enregistrement à un premier serveur (250) ; et
la transmission, sur un réseau de communication (280), de l'ID de transaction et des deuxièmes données d'enregistrement à un deuxième serveur (240).

2. Dispositif mobile selon la revendication 1, l'au moins un processeur (111a) étant en outre utilisable pour :
la réception des premières données d'événement de réponse depuis le lecteur (120), les premières données d'événement de réponse étant associées aux premières données d'événement ; et
la réception des deuxièmes données d'événement de réponse depuis le lecteur (120), les deuxièmes données d'événement de réponse étant associées aux deuxièmes données d'événement,
dans lequel les premières données d'enregistrement sont générées depuis au moins une partie des premières données d'événement et au moins une partie des premières données d'événement de réponse, et
dans lequel les deuxièmes données d'enregistrement sont générées depuis au moins une partie des deuxièmes données d'événement et au moins une partie des deuxièmes données d'événement de réponse, et/ou
dans lequel la première application est une application de paiement (117) et les premières données d'événement sont des données de paiement, et/ou
dans lequel la deuxième application est une application commerciale (113) et les deuxièmes données d'événement sont des données commerciales.

3. Dispositif mobile selon la revendication 2, dans lequel les premières données d'enregistrement incluent au moins un parmi un ID de portefeuille, un ID d'événement, et un résultat d'événement.

4. Dispositif mobile selon la revendication 2, les deuxièmes données d'enregistrement incluent au moins un parmi un ID du commerçant et un ID du consommateur.

5. Procédé pour la gestion de données de transaction sans contact, le procédé comprenant les étapes de :
l'exécution d'un événement de connexion, l'événement de connexion se passant lorsqu'un module de communication sans contact (111c) est de manière communicative couplé à un lecteur (120) ; et
la génération d'un identificateur de transaction (ID) correspondant à l'événement de connexion ;
dans lequel le procédé comprend en outre les étapes de :
la transmission des premières données d'événement au lecteur (120), les premières données d'événement étant associées à une première application (117) ;
la transmission des deuxièmes données d'événement au lecteur (120), les deuxièmes données d'événement étant associées à une deuxième application (113) ;
la génération des premières données d'enregistrement depuis au moins une partie des premières données d'événement ;
la génération des deuxièmes données d'enregistrement depuis au moins une partie des deuxièmes données d'événement ;
l'attribution de l'ID de transaction à chacune des premières données d'enregistrement et des deuxièmes données d'enregistrement ;
la transmission, sur un réseau de communication (280), de l'ID de transaction et des premières données d'enregistrement à un premier serveur (250) ; et
la transmission, sur un réseau de communication (280), de l'ID de transaction et des deuxièmes données d'enregistrement à un deuxième serveur (240).

6. Procédé selon la revendication 5, comprenant en outre les étapes de :
la réception des premières données d'événement de réponse depuis le lecteur (120), les premières données d'événement de réponse étant associées aux premières données d'événement ; et
la réception des deuxièmes données d'événement de réponse depuis le lecteur (120), les deuxièmes données d'événement de réponse étant associées aux deuxièmes données d'événement,
dans lequel les premières données d'enregistrement sont générées depuis au moins une partie des premières données d'événement et au moins une partie des premières données d'événement de réponse, et
dans lequel les deuxièmes données d'enregistrement sont générées depuis au moins une partie des deuxièmes données d'événement et au moins une partie des deuxièmes données d'événement de réponse,
dans lequel la première application est une application de paiement (117) et les premières données d'événement sont des données de paiement, et/ou
dans lequel la deuxième application est une application commerciale (113) et les deuxièmes données d'événement sont des données commerciales.

7. Procédé selon la revendication 6, dans lequel les premières données d'enregistrement incluent au moins un parmi un ID de portefeuille, un ID d'événement, et un résultat d'événement.

8. Procédé selon la revendication 6, les deuxièmes données d'enregistrement incluent au moins un parmi un ID du commerçant et un ID du consommateur.

9. Support non transitoire lisible par ordinateur ayant stocké en lui des séquences d'instructions pour provoquer au moins un processeur pour :
la réalisation d'un événement de connexion, l'événement de connexion se passant lorsqu'un module de communication sans contact (111c) est de manière communicative couplé à un lecteur (120) ; et
la génération d'un identificateur de transaction (ID) correspondant à l'événement de connexion ;
dans lequel le support non transitoire lisible par ordinateur a stocké en lui des séquences d'instructions pour en outre provoquer au moins un processeur (111a) pour :
la transmission des premières données d'événement au lecteur (120), les premières données d'événement étant associées à une première application (117) ;
la transmission des deuxièmes données d'événement au lecteur (120), les deuxièmes données d'événement étant associées à une deuxième application (113) ;
la génération des premières données d'enregistrement depuis au moins une partie des premières données d'événement ;
la génération des deuxièmes données d'enregistrement depuis au moins une partie des deuxièmes données d'événement ;
l'attribution de l'ID de transaction à chacune des premières données d'enregistrement et des deuxièmes données d'enregistrement ;
la transmission, sur un réseau de communication (280), de l'ID de transaction et des premières données d'enregistrement à un premier serveur (250) ; et
la transmission, sur un réseau de communication (280), de l'ID de transaction et des deuxièmes données d'enregistrement à un deuxième serveur (240).

10. Support non transitoire lisible par ordinateur selon la revendication 9, ayant stocké en lui des séquences d'instructions pour en outre provoquer au moins un processeur (111a) pour :
la réception des premières données d'événement de réponse depuis le lecteur (120), les premières données d'événement de réponse étant associées aux premières données d'événement ; et
la réception des deuxièmes données d'événement de réponse depuis le lecteur (120), les deuxièmes données d'événement de réponse étant associées aux deuxièmes données d'événement,
dans lequel les premières données d'enregistrement sont générées depuis au moins une partie des premières données d'événement et au moins une partie des premières données d'événement de réponse, et
dans lequel les deuxièmes données d'enregistrement sont générées depuis au moins une partie des deuxièmes données d'événement et au moins une partie des deuxièmes données d'événement de réponse.

11. Support non transitoire lisible par ordinateur selon la revendication 9, dans lequel la première application est une application de paiement (117) et les premières données d'événement sont des données de paiement.

12. Support non transitoire lisible par ordinateur selon la revendication 11, dans lequel les premières données d'enregistrement incluent au moins un parmi un ID de portefeuille, un ID d'événement, et un résultat d'événement.

13. Support non transitoire lisible par ordinateur selon la revendication 9, dans lequel la deuxième application est une application commerciale (117) et les deuxièmes données d'événement sont des données commerciales.

14. Support non transitoire lisible par ordinateur selon la revendication 13, les deuxièmes données d'enregistrement incluent au moins un parmi un ID du commerçant et un ID du consommateur.
